# EUROPÄISCHE PATENTANMELDUNG

(11) **EP 3 398 418 A1**
(43) Veröffentlichungstag der Anmeldung: **07.11.2018**
(21) Anmeldenummer: 18152438.0
(22) Anmeldetag: 19.01.2018
(51) Int. Cl.: A01B 63/10, F15B 11/17, F15B 11/16

(54) **HYDRAULIKSYSTEM EINER LAND- ODER BAUWIRTSCHAFTLICH NUTZBAREN ARBEITSMASCHINE**

(30) Priorität: 03.05.2017 DE 102017109421
(71) Anmelder: CLAAS Tractor S.A.S., 78141 Vélizy-Villacoublay Cedex (FR)
(72) Erfinder: Kirchhoff, Manfred, 39221 Bördeland OT Eggersdorf (DE); Fedde, Thomas, 33129 Delbrück (DE)
(74) Vertreter: Budach, Steffen

(57) **Zusammenfassung**

Ein Hydrauliksystem einer land- oder bauwirtschaftlich nutzbaren Arbeitsmaschine mit zumindest zwei Verbrauchern (13 und 15) ist als Closed-Center-System ausgebildet, wobei von Steuergeräten, die jeweils den Verbrauchern (13 und 15) zugeordnet sind, in einer zentralen Lastsignalleitung (8) ein Lastdrucksignal (p_{LS}) erzeugt wird. Dabei weist das Hydrauliksystem eine Verstellpumpe (2) auf, deren Fördervolumen über einen Verstellzylinder (5) einstellbar ist, wobei das einer Druckwaage (6) zugeführte Lastdrucksignal (p_{LS}) über diese zur Bildung einer ersten Druckdifferenz (Δp_{LS}) mit einem Pumpendruck (pₚ) vergleichbar ist und ein Förderstrom der Verstellpumpe (2) aufgrund dieser Druckdifferenz (Δp_{LS}) regelbar ist. Zur Schaffung von Mitteln innerhalb eines als Closed-Center-System betriebenen Hydrauliksystems, mittels welcher alle Verbraucher bedarfsgerecht mit Druckmittel versorgt werden, so dass mit diesen die jeweils erforderlichen Stellgeschwindigkeiten erzielbar sind, soll zumindest ein in einem primären Kreislauf (12) angeordneter primärer Verbraucher (13) oder zumindest ein in einem sekundären Kreislauf (14) angeordneter sekundärer Verbraucher (15) wahlweise mit Druckmittel aus der Verstellpumpe (2) versorgt werden, wobei das Hydrauliksystem eine zweite Hydraulikpumpe (20) aufweist, die über ein Steuersystem derart mit zumindest einem der Kreisläufe (14) des Hydrauliksystems verbindbar ist, dass über diese ein auftretendes Volumenstromdefizit ausgleichbar ist, und wobei in einer von der zweiten Hydraulikpumpe (20) ausgehenden sekundären Druckleitung (21) zumindest ein in Abhängigkeit von einem Lastdrucksignal (p_{LS2}) betätigbares Steuerelement (22) angeordnet ist.

## Beschreibung

Die Erfindung betrifft ein Hydrauliksystem einer land- oder bauwirtschaftlich nutzbaren Arbeitsmaschine mit zumindest zwei Verbrauchern, das als Closed-Center-System ausgebildet ist, wobei von Steuergeräten, die jeweils den Verbrauchern zugeordnet sind, in einer zentralen Lastsignalleitung ein Lastdrucksignal erzeugt wird, und mit einer Verstellpumpe, deren Fördervolumen über einen Verstellzylinder einstellbar ist, wobei das einer Druckwaage zugeführte Lastdrucksignal über diese zur Bildung einer ersten Druckdifferenz mit einem Pumpendruck vergleichbar ist und ein Förderstrom der Verstellpumpe aufgrund dieser Druckdifferenz regelbar ist.

Ein entsprechendes Hydrauliksystem eines land- oder bauwirtschaftlich nutzbaren Fahrzeugs wurde in der Vergangenheit zumeist als Open-Center-System ausgeführt, bei welchem eine Konstantpumpe stets, d. h., auch dann, wenn keiner der hydraulischen Verbraucher mit hydraulischer Leistung versorgt wird, einen konstanten Volumenstrom mit ihrer maximalen Leistungsaufnahme fördert. Die Folge davon ist, dass eine hohe Verlustleistung und eine entsprechend starke Erwärmung des Druckmittels eintreten. Daher werden inzwischen zumeist Closed-Center-Systeme mit einer in ihrem Fördervolumen veränderbaren Hydraulikpumpe verwendet, die folglich einen bedarfsgerechten Volumenstrom liefert. Dabei wird die Fördermenge der als Verstellpumpe ausgebildeten Hydraulikpumpe über ein sogenanntes Load-Sensing-System geregelt.

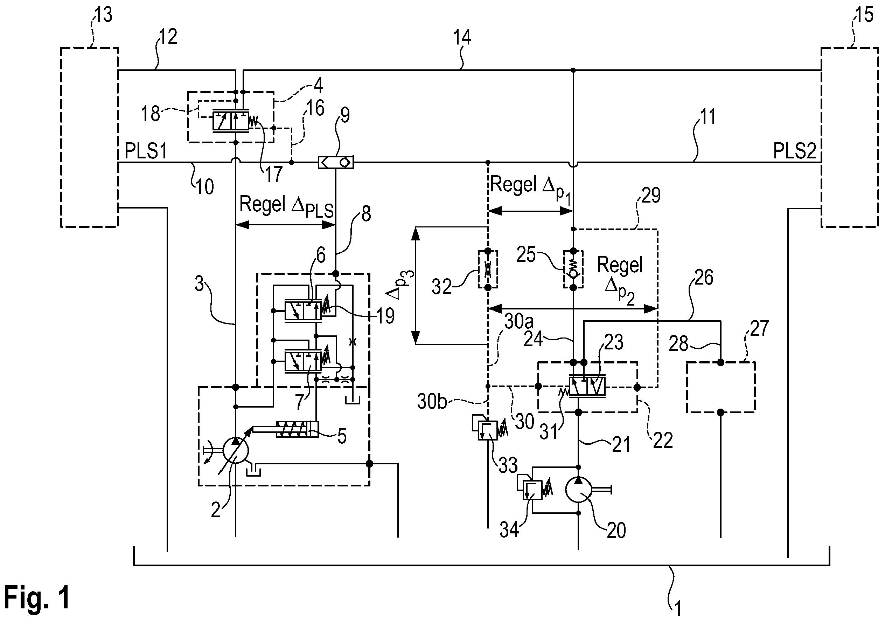

Ein hydraulisches Hydrauliksystem für ein land- oder bauwirtschaftlich nutzbares Fahrzeug der im Oberbegriff des Patentanspruchs 1 angegebenen Gattung ist aus der DE 10 2014 114 210 A1 bekannt. Aus der Figur 1 dieser Druckschrift geht ein Hydrauliksystem hervor, bei welchem einer Druckwaage über eine Lastsignalleitung ein Lastdrucksignal p_{LS} zugeführt wird. Über die Lastsignalleitung wird von jedem der Steuerventile, die den einzelnen Verbrauchern zugeordnet sind, der jeweils höchste Lastdruck an die Druckwaage gemeldet und die Verstellpumpe baut nur den Lastdruck zuzüglich eines geringen Drucküberschusses auf. Dadurch wird ermöglicht, dass diese in einen Stand-by-Zustand zurückgeschwenkt wird, sobald sich die Steuerventile des Hydrauliksystems in ihrer Neutralstellung befinden und keinen Volumenstrom abfordern. Außerdem ist vorgesehen, dass das Steuersystem einen zwischen der Druckwaage und einem Verstellzylinder der Verstellpumpe angeordneten Druckregler aufweist, um das Load-Sensing-Signal zu beeinflussen. Der Pumpendruck pₚ pendelt sich so ein, dass die Druckdifferenz Δp_{LS} zwischen dem Lastdruck p_{LS} der Druckwaage und dem Pumpendruck pₚ immer gleich bleibt. Werden ein oder mehrere Ventile betätigt, wird der Druck über die Lastsignalleitung an die Druckwaage weitergeleitet, wobei diese durch einen Vergleich des Lastdrucks p_{LS} und des Pumpendrucks pₚ den Energiebedarf des Systems feststellt. Pumpendruck und Pumpenförderstrom werden so stets automatisch an den jeweiligen Bedarf angepasst.

Der jeweils höchste Lastdruck p_{LS} wird vom entsprechenden Steuerventil an die Druckwaage gemeldet, woraufhin die Hydraulikpumpe nur den Lastdruck zuzüglich eines geringen Drucküberschusses (Regel - Δp) aufbaut. Bei einer parallelen Betätigung mehrerer Verbraucher wird der Pumpenförderstrom durch den Einsatz sogenannter Sektionsdruckwaagen unabhängig von den verschiedenen Lastdrücken so auf die Verbraucher aufgeteilt, wie es dem Verhältnis der Öffnungsquerschnitte der Steuerventile entspricht. Weiterhin ist das in der Druckschrift beschriebene Hydrauliksystem des land- oder bauwirtschaftlich nutzbaren Fahrzeugs über Remote-Anschlüsse eines Power-Beyond-Anschlusssystems mit einem Hydraulikkreis eines Arbeitsgerätes verbunden, wobei Lastdrucksignale von Steuergeräten dieses Anbaugerätes mittels eines Regelventils verstärkt werden sollen.

Aus Kostengründen wird die Verstellpumpe in vielen Fällen nicht mit einer ausreichenden maximalen Fördermenge ausgelegt, um bei einer gleichzeitigen Volumenstromanforderung mehrerer Verbraucher eine ausreichende Versorgung für alle Verbraucher zu gewährleisten. Dies kann im Arbeitsbetrieb dazu führen, dass die Pumpenfördermenge bei parallelem Betrieb von hydraulischen Verbrauchern nicht für die gewünschten Arbeitsgeschwindigkeiten ausreicht. Letztendlich kann das auch zum ungewollten Stillstand eines Verbrauchers führen. Für den Fahrer der land- oder bauwirtschaftlich nutzbaren Arbeitsmaschine ist es aber nicht akzeptabel, dass es bei unzureichender Pumpenfördermenge zu Störungen im Arbeitsablauf kommt.

Weiterhin geht aus der EP 2 667 039 A2 ein Druckversorgungssystem eines landwirtschaftlichen Fahrzeuges als bekannt hervor, welches eine verstellbare Hauptversorgungspumpe RP, eine Lenkhilfspumpe LHP und eine für einen Notbetrieb vorgesehene, über die Fahrzeugräder angetriebene Lenkungspumpe NLP aufweist. Von der Hauptversorgungspumpe RP, die über ein Load-Sensing-System LSC gesteuert sein soll, gehen ein zu einer Arbeitshydraulik WH führender Hauptkreis MC und ein zu einem Lenksystem SS führender Lenkungskreis SC aus. Die Lenkhilfspumpe LHP fördert das Druckmittel in ein Pilotdrucksystem PPS, das mit Steuerventilen der Arbeitshydraulik verbunden ist.

Außerdem kann die Lenkhilfspumpe LHP je nach Stellung eines Prioritätsventils PVL in den Lenkungskreis SC einspeisen. Dieses Prioritätsventil PVL wird zu seiner Steuerung einerseits mit einem Druck der Lenkungsleitung SC und andererseits mit einem Lastdrucksignal der Lastsignalleitung LSC beaufschlagt, wobei je nach Druckdifferenz dieser beiden Steuerdrücke die Lenkungshydraulik SS nur von der Hauptversorgungspumpe RP, von der Lenkhilfspumpe LHP und der Hauptversorgungspumpe oder sowohl von diesen beiden Pumpen RP + LHP und der für einen Notbetrieb vorgesehenen Lenkungspumpe NLP mit Druckmittel versorgt wird.

Es ist Aufgabe der vorliegenden Erfindung, innerhalb eines als Closed-Center-System betriebenen Hydrauliksystems Mittel vorzusehen, mittels welcher alle Verbraucher bedarfsgerecht mit Druckmittel versorgt werden, um mit diesen die jeweils erforderlichen Stellgeschwindigkeiten zu erzielen.

Diese Aufgabe wird, ausgehend vom Oberbegriff des Patentanspruchs 1 durch dessen kennzeichnende Merkmale gelöst. Vorteilhafte Ausgestaltungen sind in den von diesem abhängigen Patentansprüchen wiedergegeben, welche jeweils für sich genommen oder in Kombination miteinander einen Aspekt der Erfindung darstellen können.

Danach ist ein Hydrauliksystem einer land- oder bauwirtschaftlich nutzbaren Arbeitsmaschine mit zumindest zwei Verbrauchern als Closed-Center-System ausgebildet, wobei von Steuergeräten, die jeweils den Verbrauchern zugeordnet sind, in einer zentralen Lastsignalleitung ein Lastdrucksignal erzeugt wird. Weiterhin weist das Hydrauliksystem eine Verstellpumpe auf, deren Fördervolumen über einen Verstellzylinder einstellbar ist, wobei das einer Druckwaage zugeführte Lastdrucksignal über diese zur Bildung einer ersten Druckdifferenz mit einem Pumpendruck vergleichbar ist und ein Förderstrom der Verstellpumpe aufgrund dieser Druckdifferenz regelbar ist.

Bei einem derartigen Hydrauliksystem soll zumindest ein in einem primären Kreislauf angeordneter primärer Verbraucher oder zumindest ein in einem sekundären Kreislauf angeordneter sekundärer Verbraucher wahlweise mit Druckmittel aus der Verstellpumpe versorgt werden. Dabei weist das Hydrauliksystem eine zweite Hydraulikpumpe auf, die über ein Steuersystem derart mit zumindest einem Kreislauf des Hydrauliksystems verbindbar ist, dass über diese ein auftretendes Volumenstromdefizit ausgleichbar ist. In einer von der zweiten Hydraulikpumpe ausgehenden sekundären Druckleitung ist zumindest ein in Abhängigkeit von einem Lastdrucksignal betätigbares Steuerelement angeordnet.

Der primäre Kreislauf des zumindest einen primären Verbrauchers, dem wie z.B. einer Lenkungshydraulik Sicherheitsfunktionen zugeordnet sein können, wird aufgrund eines von diesem erzeugten Lastdrucksignals priorisiert mit Druckmittel aus der Verstellpumpe versorgt. Wenn hingegen an diesem kein oder nur ein geringes Lastdrucksignal auftritt und gleichzeitig der Lastdruck an dem zumindest einen sekundären Verbraucher ansteigt, erfolgt keine oder nur eine geringe Druckmittelversorgung des primären Kreislaufs und der Hauptteil des von der Verstellpumpe geförderten Druckmittels wird über den sekundären Kreislauf dem zumindest einen sekundären Verbraucher zugeführt.

Bei Anforderungsspitzen des Volumenstromes, die zu einer Unterversorgung führen würden, gleicht die zweite Hydraulikpumpe das entsprechende Volumenstromdefizit aus, indem sie Druckmittel in den sekundären Kreislauf einspeist. Das in einer sekundären Druckleitung der zweiten Hydraulikpumpe angeordnete Steuerelement wird dabei lastdruckabhängig betätigt, so dass stets der geforderte Volumenstrom in den sekundären Kreislauf gefördert wird. Dabei soll vorzugsweise mittels der von der zweiten Hydraulikpumpe ausgehenden sekundären Druckleitung Druckmittel in den sekundären Arbeitskreis einspeisbar sein.

Demgegenüber ist nach der DE 10 2014 114 210 A1 nur eine Verstellpumpe vorgesehen, die über Sektionsdruckwaagen Druckmittel in unterschiedliche Kreise der Arbeitshydraulik des Arbeitsfahrzeuges und der Arbeitshydraulik eines Anbaugerätes fördert.

Wenn die Druckmittelversorgung über die einzige Verstellpumpe aus Kostengründen nicht so ausgelegt ist, dass bei gleichzeitiger Volumenstromanforderung mehrerer Verbraucher eine ausreichende Versorgung aller Verbraucher möglich ist, so führt das im Arbeitsbetrieb dazu, dass die Pumpenfördermenge bei parallelem Betrieb von hydraulischen Verbrauchern nicht für die gewünschten Arbeitsgeschwindigkeiten ausreicht. Es kann zu langsamen Stellbewegungen eines Verbrauchers oder sogar zu dessen ungewollten Stillstand führen. Für den Fahrer des Arbeitsfahrzeugs ist es nicht akzeptabel, dass es bei unzureichender Pumpenfördermenge zu Störungen in den Arbeitsabläufen kommt.

Bei der EP 2 667 039 A2 ist im Gegensatz zur erfindungsgemäßen Lehre keine Druckwaage zur Ermittlung der Druckdifferenz zwischen dem Pumpendruck und einem Lastdruck vorgesehen. Weiterhin speist die Verstellpumpe sowohl in das Lenkungssystem SS, in eine Arbeitshydraulik WH und in einen Power Beyond Circuit PBC ein. Nur dann, wenn die Fördermenge der Verstellpumpe nicht mehr für die Versorgung der Lenkungshydraulik SS ausreicht, wird ein Volumenstrom aus der für den Notbetrieb vorgesehenen Lenkungspumpe NLP oder aus dieser und aus der Lenkungshilfspumpe LHP mit einem Volumenstrom versorgt.

In weiterer Ausgestaltung der Erfindung ist vorgesehen, dass eine Lenkungshydraulik primärer Verbraucher oder Bestandteil des primären Kreislaufs ist, also innerhalb des primären Kreislaufs angeordnet ist. Dabei kann eine von der Verstellpumpe ausgehende primäre Druckleitung zu einem als 3/2-Wegeventil ausgebildeten ersten Prioritätsventil führen, mit welchem das Druckmittel der primären Druckleitung wahlweise über den primären Kreislauf dem zumindest einen primären Verbraucher oder über den sekundären Kreislauf dem zumindest einen sekundären Verbraucher zuführbar ist. Das Prioritätsventil kann auch als 3/3-Wegeventil ausgebildet sein, in dessen Zwischenstellung aufgrund einer negativen Schaltüberdeckung die Druckleitung über gesteuerte Querschnitte mit beiden Kreisläufen verbunden ist. Wie zuvor angegeben, soll das Prioritätsventil eine bevorzugte Druckmittelversorgung des primären Kreislaufes sicherstellen.

Weiterhin ist vorgesehen, dass an den zumindest einen primären Verbraucher eine primäre Lastsignalleitung und an den zumindest einen sekundären Verbraucher eine sekundäre Lastsignalleitung angeschlossen sind, dass die beiden Lastsignalleitungen wahlweise über ein Wechselventil mit der zentralen Lastsignalleitung verbindbar sind und dass das Prioritätsventil einerseits vom Druck der primären Lastsignalleitung und andererseits vom Druck des primären Kreislaufs steuerbar ist. Parallel zur Druckbeaufschlagung mit dem Druck der primären Lastsignalleitung kann eine Regelfeder vorgesehen sein.

Außerdem soll in der sekundären Druckleitung der zweiten Hydraulikpumpe als Steuerelement ein Pilotventil angeordnet sein, das als 3/2-Wegeventil ausgebildet ist und über welches die sekundäre Druckleitung wahlweise mit einer zum sekundären Kreislauf führenden ersten Arbeitsleitung oder mit einer an einen tertiären Verbraucher angeschlossenen zweiten Arbeitsleitung verbindbar ist. Alternativ dazu kann die sekundäre Druckleitung wahlweise mit einer zum sekundären Kreislauf führenden ersten Arbeitsleitung oder mit einem drucklosen Rücklauf in den Tank verbindbar sein.

In weiterer Ausgestaltung der Erfindung ist vorgesehen, dass das als Steuerelement für die Einspeisung vorgesehene Pilotventil hydraulisch gesteuert ist, und zwar, einerseits über den Druck des sekundären Kreislaufs und andererseits über den Lastsignaldruck der sekundären Lastsignalleitung.

Weiterhin soll eine Federkraft einer Regelfeder des Pilotventils derart ausgelegt sein, dass dieses bei Unterschreiten einer Druckdifferenz zwischen dem Druck des sekundären Kreislaufs und dem Lastsignaldruck der sekundären Lastsignalleitung die sekundäre Druckleitung mit dem sekundären Kreislauf verbindet. Das Pilotventil weist folglich auch die Funktion einer Druckwaage auf.

Außerdem ist vorgesehen, dass zwischen einem Steueranschluss des zweiten Pilotventils und der sekundären Lastsignalleitung eine Messblende angeordnet ist, dass in einem Zweig der Steuerleitung ein Druckbegrenzungsventil angeordnet ist, von dem eine zum Tank führende Rücklaufleitung ausgeht und dass ein Öffnungsdruck des Druckbegrenzungsventils niedriger ist als ein maximaler Pumpendruck der Verstellpumpe, wobei eine Druckdifferenz über die Messblende größer ist als eine Schaltdruckdifferenz am Pilotventil.

Schließlich soll parallel zur zweiten Hydraulikpumpe ein Druckbegrenzungsventil angeordnet sein, das bei einem Pumpendruck (p_{HP}) > 210 bar einen Rücklauf in eine Saugleitung der zweiten Hydraulikpumpe öffnet.

Die Erfindung ist nicht auf die angegebene Kombination der Merkmale des unabhängigen Patentanspruchs 1 mit den von diesem abhängigen Patentansprüchen beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Die einzige Figur 1 zeigt ein erfindungsgemäßes Hydrauliksystem, das als Closes-Center-System ausgebildet ist und eine lastdruckabhängig gesteuerte Verstellpumpe und eine Konstantpumpe aufweist.

Die Figur 1 zeigt ein Hydrauliksystem, bei dem es sich beispielsweise um eine Arbeitsund Lenkhydraulik eines landwirtschaftlichen Traktors oder Systemfahrzeuges handeln kann. Dieses Hydrauliksystem ist als Closed-Center-System ausgebildet, bei dem Druckmittel aus einem Tank 1 über eine Verstellpumpe 2, die vorzugsweise als Axialkolbeneinheit nach dem Schrägachsenprinzip ausgebildet ist, einer Druckleitung 3 und somit einem Prioritätsventil 4 zuführt. Zur Verstellung des Fördervolumens der Verstellpumpe 2 ist ein einfach wirkender Verstellzylinder 5 vorgesehen. Dabei ist dieser Verstellzylinder 5 über eine Druckwaage 6 und einen Druckregler 7 an eine zentrale Lastsignalleitung 8 angeschlossen. Die zentrale Lastsignalleitung 8 geht dabei von einem Wechselventil 9 aus, das mit einer primären Lastsignalleitung 10 und einer sekundären Lastsignalleitung 11 verbunden ist. Über das Wechselventil 9 können ein primärer oder ein sekundärer Load-Sensing-Druck auf die zentrale Lastsignalleitung und somit auf die Druckwaage 6 übertragen werden.

Das Prioritätsventil 4 ist im vorliegenden Fall als 3/2-Wegentil ausgebildet und verbindet in einer ersten Schaltstellung die Druckleitung 3 mit einem primären Kreislauf 12, in welchem ein primärer Verbraucher 13 angeordnet ist, und in einer zweiten Schaltstellung mit einem sekundären Kreislauf 14, der einen sekundären Verbraucher 15 aufnimmt. In beiden Fällen kann es sich anstelle des einen Verbrauchers auch um mehrere Verbraucher handeln, die dann über Sektionsdruckwaagen an den jeweiligen Kreislauf 12 bzw. 14 angeschlossen sind. Das Prioritätsventil 4 weist die Funktion einer Druckwaage auf und wird einerseits über eine Steuerleitung 16 mit dem Load-Sensing-Druck p_{LS1} der primären Lastsignalleitung 10 sowie der Kraft einer Regelfeder 17 beaufschlagt. Andererseits wirkt auf das Prioritätsventil 4 ein Steuerdruck einer Steuerleitung 18, der dem Druck im primären Kreislauf 12 entspricht.

Nach der Figur 1 befindet sich die Verstellpumpe 2 in ihrem Stand-By-Betrieb. Wenn die Verstellpumpe 2, wie vorzugsweise vorgesehen, nach dem Schrägachsenprinzip ausgebildet ist, befindet sich die entsprechende Axialkolbeneinheit in einem Zustand mit geringem Schwenkwinkel und somit geringem Verdrängungsvolumen. In diesem Zustand fördert die Verstellpumpe 2 nur eine sehr geringe Druckmittelmenge und baut nur einen geringen Druck auf. Der Pumpendruck pₚ in der Druckleitung 3 pendelt sich so ein, dass die Druckdifferenz Regel Δp_{LS} zwischen dem Lastdruck p_{LS} der Druckwaage 6 und dem Förderdruck pₚ der Verstellpumpe 2 immer gleich bleibt.

Wird nun innerhalb eines der beiden Kreisläufe 12 oder 14 oder in beiden Kreisläufen 12 und 14 ein nicht näher dargestelltes den beiden Verbrauchern zugeordnetes Steuergerät betätigt, so steigt der Druck in der primären Lastsignalleitung 8 an und dieser erhöhte Lastdruck p_{LS} wirkt auf die Druckwaage 6, über die der Druckregler 7 vorgesteuert wird. Dieser Lastdruck p_{LS} wirkt in die gleiche Richtung wie eine an der Druckwaage 6 vorgesehene Druckfeder 19, so dass die Druckwaage 6 durch den Vergleich des Lastdrucks p_{LS} und des Pumpendrucks pₚ den Energiebedarf des Systems feststellen kann. Der Pumpendruck pₚ und der Pumpenförderstrom werden so automatisch an den jeweiligen Bedarf angepasst.

Der jeweils höchste Lastdruck p_{LS} wird somit vom jeweiligen Steuergerät an die Verstellpumpe 2 gemeldet, und diese baut nur den Lastdruck zuzüglich eines geringen Drucküberschusses (Regel - Δp_{LS}) auf. Insgesamt wird dadurch erreicht, dass die Leistungsaufnahme der Verstellpumpe 2 permanent an den Bedarf angepasst wird. Der Wirkungsgrad ist, insbesondere im Feinsteuerbereich, erheblich größer als bei einem sogenannten Open-Center-System. Die Stellgeschwindigkeiten der Verbraucher 13 und 15 wird nicht durch sich ändernde Lastdrücke beeinflusst, so dass ein Gegensteuern nicht erforderlich ist.

Weiterhin ist erfindungsgemäß eine zweite Hydraulikpumpe 20, die vorzugsweise als Konstantpumpe ausgebildet sein soll, vorgesehen. Diese Hydraulikpumpe 20 saugt Druckmittel aus dem Tank 1 an und fördert es über eine sekundäre Druckleitung 21 in ein als Steuerelement 22 dienendes Pilotventil 23, welches als 3/2-Wegeventil ausgebildet ist. Dieses befindet sich gemäß der Figur 1 in einer Schaltstellung, in der das Druckmittel über eine erste Arbeitsleitung 24 und ein darin angeordnetes Rückschlagventil 25 in den sekundären Kreislauf 14 gefördert, also dem sekundären Verbraucher 15 zugeführt wird. Das soll dann der Fall sein, wenn die Verstellpumpe 2 ihre Sättigungsgrenze erreicht hat und es zu einer Unterversorgung der sekundären Verbraucher 15 im sekundären Kreislauf 14 kommen würde.

In seiner weiteren Schaltstellung verbindet das Pilotventil 23 dagegen die sekundäre Druckleitung 21 mit einer zweiten Arbeitsleitung 26, die zu einem tertiären Verbraucher 27 führt, also einen tertiären Kreislauf 28 bildet. Diese sekundäre Arbeitsleitung kann aber auch unmittelbar als Rücklauf in den Tank 1 geführt werden.

Die Steuerung des Pilotventils 23 erfolgt einerseits über den Druck in dem sekundären Kreislauf 14, wobei dieser dem Pilotventil 23 über eine Steuerleitung 29 zugeführt wird. Andererseits ist das Pilotventil 23 über eine Steuerleitung 30 mit einem Steuerdruck und über eine Regelfeder 31 mit einer Federkraft beaufschlagt. Zwischen einem ersten Zweig 30a der Steuerleitung 30 und der sekundären Lastsignalleitung 11 ist eine Messblende 32 angeordnet, während ein zweiter Zweig 30b der Steuerleitung 30 zu einem Druckbegrenzungsventil 33 führt. Eine Regeldruckdifferenz Regel Δp₂ ist definiert durch die Drücke in der Steuerleitung 30 und in der Steuerleitung 29. Die Regelfeder 31 des Pilotventils 23 ist derart ausgelegt, dass bei Unterschreitung eines Sollwertes der Regeldruckdifferenz Δp₂, deren Ursache in einem Erreichen der Sättigungsgrenze der Verstellpumpe 2 liegen kann, der Volumenstrom der zweiten Hydraulikpumpe 20 durch Umschalten des Pilotventils 23 zum Ausgleich des ermittelten Volumenstromdefizits in den sekundären Kreislauf 14 eingespeist wird.

Eine weitere Regeldruckdifferenz Regel Δp₁ bezeichnet eine Differenz zwischen den Drücken in dem sekundären Kreislauf 14 und der sekundären Lastsignalleitung 11, also vor der Messblende 32. Schließlich ist eine Druckdifferenz Δp₃ gekennzeichnet durch die Drücke in dem sekundären Kreislauf 14 und in der Steuerleitung 30, also über die Messblende 32. Der Öffnungsdruck p_{DBV} des Druckbegrenzungsventils 33 ist niedriger eingestellt als der maximale Pumpendruck p_{p/max} der Verstellpumpe 2. Bei einem maximalen Pumpendruck p_{p/max} der Verstellpumpe 2 wird ein Wert der Druckdifferenz Δp₃ über die Messblende 32 erzeugt, der größer ist als die Schaltdruckdifferenz für das Pilotventil 23.

Auf diese Weise wird verhindert, dass das Pilotventil 23 in den sekundären Kreislauf 14 umschaltet, ohne dass eine Unterversorgung vorliegt. Außerdem wird durch den gegenüber dem maximalen Pumpendruck p_{p/max} der Verstellpumpe 2 geringeren Öffnungsdruck des Druckbegrenzungsventils 33 verhindert, dass die zweite Hydraulikpumpe 20 mit maximaler Verlustleistung arbeitet, wenn aufgrund einer Druckabschneidung aber nicht Sättigung die Regeldruckdifferenz Δp₁ das Pilotventil 23 in seine Schaltstellung für eine Einspeisung umschaltet. Eine Druckabschneidung ist eine Verstellung des Pumpenförderstromes, um einen oberen einstellbaren Druck zu begrenzen oder zu verringern, damit Leistungsverluste vermieden werden, die anderenfalls durch das Ansprechen von Druckbegrenzungsventilen auftreten würden. Parallel zur zweiten Hydraulikpumpe 20 ist ein weiteres Druckbegrenzungsventil 34 angeordnet, über das der Druck in der sekundären Druckleitung 21 begrenzt ist.

### Bezugszeichen

- 1: Tank
- 2: Verstellpumpe
- 3: primäre Druckleitung
- 4: Prioritätsventil
- 5: Verstellzylinder
- 6: Druckwaage
- 7: Druckregler
- 8: zentrale Lastsignalleitung
- 9: Wechselventil
- 10: primäre Lastsignalleitung
- 11: sekundäre Lastsignalleitung
- 12: primärer Kreislauf
- 13: primärer Verbraucher
- 14: sekundärer Kreislauf
- 15: sekundärer Verbraucher
- 16: Steuerleitung von 4
- 17: Regelfeder von 4
- 18: Steuerleitung von 4
- 19: Druckfeder von 6
- 20: zweite Hydraulikpumpe
- 21: sekundäre Druckleitung
- 22: Steuerelement
- 23: Pilotventil
- 24: erste Arbeitsleitung
- 25: Rückschlagventil
- 26: zweite Arbeitsleitung
- 27: tertiärer Verbraucher
- 28: tertiärer Kreislauf
- 29: Steuerleitung von 23
- 30: Steuerleitung von 23
- 30a: Zweig von 30
- 30b: Zweig von 30
- 31: Regelfeder
- 32: Messblende
- 33: Druckbegrenzungsventil
- 34: Druckbegrenzungsventil

- p_{LS}: Lastdruck in zentraler Lastsignalleitung 8
- p_{LS1}: Lastdruck in primärer Lastsignalleitung 10
- p_{LS2}: Lastdruck in sekundärer Lastsignalleitung 11
- pₚ: Förderdruck der Verstellpumpe 2
- p_{HP}: Pumpendruck von 20
- p_{p/max}: maximaler Pumpendruck von 2
- p_{DBV}: Öffnungsdruck des Druckbegrenzungsventils 33
- Δp_{LS}: Druckdifferenz zwischen Förderdruck und Lastdruck
- Δp₁: Regeldruckdifferenz zwischen 14 und 11
- Δp₂: Regeldruckdifferenz zwischen 30 und 29
- Δp₃: Druckdifferenz über Messblende 32

## Patentansprüche

1. Hydrauliksystem einer land- oder bauwirtschaftlich nutzbaren Arbeitsmaschine mit zumindest zwei Verbrauchern (13 und 15), das als Closed-Center-System ausgebildet ist, wobei von Steuergeräten, die jeweils den Verbrauchern (13 und 15) zugeordnet sind, in einer zentralen Lastsignalleitung (8) ein Lastdrucksignal (p_{LS}) erzeugt wird, und mit einer Verstellpumpe (2), deren Fördervolumen über einen Verstellzylinder (5) einstellbar ist, wobei das einer Druckwaage (6) zugeführte Lastdrucksignal (p_{LS}) über diese zur Bildung einer ersten Druckdifferenz (Δp_{LS}) mit einem Pumpendruck (pₚ) vergleichbar ist und ein Förderstrom der Verstellpumpe (2) aufgrund dieser Druckdifferenz (Δp_{LS}) regelbar ist, **dadurch gekennzeichnet, dass** zumindest ein in einem primären Kreislauf (12) angeordneter primärer Verbraucher (13) oder zumindest ein in einem sekundären Kreislauf (14) angeordneter sekundärer Verbraucher (15) wahlweise mit Druckmittel aus der Verstellpumpe (2) versorgt werden, dass das Hydrauliksystem eine zweite Hydraulikpumpe (20) aufweist, die über ein Steuersystem derart mit zumindest einem der Kreisläufe (14) des Hydrauliksystems verbindbar ist, dass über diese ein auftretendes Volumenstromdefizit ausgleichbar ist, und dass in einer von der zweiten Hydraulikpumpe (20) ausgehenden sekundären Druckleitung (21) zumindest ein in Abhängigkeit von einem Lastdrucksignal (p_{LS2}) betätigbares Steuerelement (22) angeordnet ist.

2. Hydrauliksystem nach Patentanspruch 1, **dadurch gekennzeichnet, dass** eine Lenkungshydraulik innerhalb des primären Kreislaufs (12) angeordnet ist und vorrangig mit einem Volumenstrom der Verstellpumpe (2) versorgt wird.

3. Hydrauliksystem nach Patentanspruch 1, **dadurch gekennzeichnet, dass** eine von der Verstellpumpe (2) ausgehende primäre Druckleitung (3) zu einem als 3/2-Wegeventil ausgebildeten ersten Prioritätsventil (4) führt, mit welchem das Druckmittel der primären Druckleitung (3) wahlweise über einen primären Kreislauf (12) zumindest einem primären Verbraucher (13) oder über einen sekundären Kreislauf (14) zumindest einem sekundären Verbraucher (15) zuführbar ist.

4. Hydrauliksystem nach Patentansprüche 3, **dadurch gekennzeichnet, dass** an den zumindest einen primären Verbraucher (13) eine primäre Lastsignalleitung (10) und an den zumindest einen sekundären Verbraucher (15) eine sekundäre Lastsignalleitung (11) angeschlossen sind, dass die beiden Lastsignalleitungen (10 und 11) wahlweise über ein Wechselventil (9) mit der zentralen Lastsignalleitung (8) verbindbar sind und dass das Prioritätsventil (4) einerseits vom Druck (p_{LS1}) der primären Lastsignalleitung (10) und andererseits vom Druck des primären Kreislaufes (12) steuerbar ist.

5. Hydrauliksystem nach Patentanspruch 1, **dadurch gekennzeichnet, dass** mittels der von der zweiten Hydraulikpumpe (20) ausgehenden sekundären Druckleitung (21) Druckmittel in den sekundären Kreislauf (14) einspeisbar ist.

6. Hydrauliksystem nach Patentanspruch 1, **dadurch gekennzeichnet, dass** in der sekundären Druckleitung (21) als Steuerelement (22) ein Pilotventil (23) angeordnet ist, das als 3/2-Wegeventil ausgebildet ist und über welches die sekundäre Druckleitung (21) wahlweise mit einer zum sekundären Kreislauf (14) führenden ersten Arbeitsleitung (24) oder mit einer an einen tertiären Verbraucher (27) angeschlossenen zweiten Arbeitsleitung (26) verbindbar ist.

7. Hydrauliksystem nach Patentanspruch 1, **dadurch gekennzeichnet, dass** in der sekundären Druckleitung (21) ein als 3/2-Wegeventil ausgebildetes Pilotventil (23) angeordnet ist, das die sekundäre Druckleitung (21) wahlweise mit einer zum sekundären Kreislauf (14) führenden ersten Arbeitsleitung (27) oder mit einem drucklosen Rücklauf in den Tank (1) verbindbar ist.

8. Hydrauliksystem nach einem der Patentansprüche 6 oder 7, **dadurch gekennzeichnet, dass** das Pilotventil (23) hydraulisch gesteuert ist, und zwar, einerseits über den Druck des sekundären Kreislaufes (14) und andererseits über den Lastsignaldruck (p_{LS2}) der sekundären Lastsignalleitung (11).

9. Hydrauliksystem nach Patentanspruch 8, **dadurch gekennzeichnet, dass** eine Federkraft einer Regelfeder (31) des Pilotventils (23) derart ausgelegt ist, dass dieses bei Unterschreiten einer Druckdifferenz (Δp₂) zwischen dem Druck des sekundären Kreislaufes (14) und dem Lastsignaldruck (p_{LS2}) der sekundären Lastsignalleitung (11) die sekundäre Druckleitung (21) mit dem sekundären Kreislauf (14) verbindet.

10. Hydrauliksystem nach Patentanspruch 9, **dadurch gekennzeichnet, dass** zwischen einer Steuerleitung (30) des zweiten Pilotventils (23) und der sekundären Lastsignalleitung (11) eine Messblende (32) angeordnet ist, dass in einem Zweig (30b) der Steuerleitung ein Druckbegrenzungsventil angeordnet ist, von dem eine zum Tank führende Rücklaufleitung ausgeht und dass ein Öffnungsdruck (p_{DBV}) des Druckbegrenzungsventils niedriger als ein maximaler Pumpendruck (p_{p/max}) der Verstellpumpe (2) ist, wobei eine Druckdifferenz (Δp₃) über die Messblende (32) größer ist als eine Schaltdruckdifferenz am Pilotventil (23).

11. Hydrauliksystem nach Patentanspruch 1, **dadurch gekennzeichnet, dass** parallel zur zweiten Hydraulikpumpe (20) ein Druckbegrenzungsventil (34) angeordnet ist, das bei einem Pumpendruck (p_{HP}) > 210 bar einen Rücklauf in eine Saugleitung der zweiten Hydraulikpumpe (20) öffnet.
